# EUROPÄISCHE PATENTANMELDUNG

(11) **EP 2 000 585 A1**
(43) Veröffentlichungstag der Anmeldung: **10.12.2008**
(21) Anmeldenummer: 08154666.5
(22) Anmeldetag: 17.04.2008
(51) Int. Cl.: D07B 1/06

(54) **Verstärkungskord für elastomere Erzeugnisse, insbesondere als Karkasslage oder Gürtellage von Fahrzeugluftreifen**

(30) Priorität: 09.06.2007 DE 102007026775
(71) Anmelder: Continental Aktiengesellschaft, 30165 Hannover (DE)
(72) Erfinder: Justine, Carole, 31515 Wunstorf (DE); Van Barneveld, Claus, 30827 Garbsen (DE); Wahl, Günter, 31249 Hohenhameln (DE)
(74) Vertreter: Finger, Karsten

(57) **Zusammenfassung**

Die Erfindung betrifft einen Verstärkungskord (1) für elastomere Erzeugnisse, insbesondere für eine Karkasslage oder eine Gürtellage eines Fahrzeugluftreifens, bestehend aus einer Seele (2) aus einem nicht-metallischen Werkstoff und aus wenigstens vier Stahl-Lagenfilamenten (4), wobei die Stahl-Lagenfilamente (4) um die Seele (2) herum verseilt sind. Der Erfindung liegt die Aufgabe zu Grunde, einen alternativen Verstärkungskord bereitzustellen, der eine hohe Festigkeit und Biegesteifigkeit aufweist, aber dennoch vergleichsweise leicht an Gewicht ist. Die Aufgabe wird gelöst, indem die Seele (2) aus wenigstens einem Seelenfilamentgarn, -zwirn oder -kord (3) aus dem Werkstoff Glasfaser besteht und indem die Stahl-Lagenfilamente (4) um die Seele (2) herum offen verseilt sind, so dass der Kord (1) bis zur Seele (2) mit Gummi durchdringbar ist.

## Beschreibung

Die Erfindung betrifft einen Verstärkungskord für elastomere Erzeugnisse, insbesondere für eine Karkasslage oder eine Gürtellage eines Fahrzeugluftreifens, bestehend aus einer Seele aus einem nicht-metallischen Werkstoff und aus wenigstens vier Stahl-Lagenfilamenten, wobei die Stahl-Lagenfilamente um die Seele herum verseilt sind. Ferner betrifft die Erfindung einen Fahrzeugluftreifen, enthaltend diese Verstärkungskorde in einer Gürtellage und/oder einer Karkasslage.

Verstärkungskorde als Festigkeitsträger für elastomere Erzeugnisse, insbesondere für eine Gürtellage oder eine Karkasslage von Fahrzeugluftreifen, sind in verschiedensten Ausführungen bekannt. Die Verstärkungskorde werden mit einer Gummimischungsschicht, beispielsweise im Kalander, umzogen, um als gummierte Festigkeitsträgerlage im Elastomerprodukt eingesetzt werden zu können. Die Verstärkungskorde in Gürtel- oder Karkasslagen, insbesondere für LKW-Reifen, müssen eine ausreichende Festigkeit aufweisen, um die im Betrieb des Reifens auftretenden Kräfte hinreichend aufnehmen zu können und dauerhaltbar zu sein. Insbesondere sollen sie hohe Zugfestigkeit, einen hohen Modul und eine hohe Biegesteifigkeit aufweisen.

Bekannt sind Verstärkungskorde aus reinem Stahl. Jedoch sind reine Stahlkorde von relativ hohem spezifischem Gewicht, wodurch der Reifen, welcher reine Stahlkorde als Festigkeitsträger der vorgenannten Verstärkungslagen einsetzt, schwer an Gewicht ist. Das hohe Gewicht wirkt sich u.a. negativ auf den Rollwiderstand aus. Zudem neigen reine Stahlkordkonstruktionen bei nicht vollständiger Gummidurchdringung zur Korrosion, wodurch die Haltbarkeit des Elastomerproduktes reduziert ist.

Um das Gewicht des Elastomerproduktes zu verringern, sind Hybridkordkonstruktionen bekannt. Hybridkorde bestehen aus wenigstens zwei unterschiedlichen Materialien. Die gattungsgemäßen Hybrid-Verstärkungskorde bestehen aus einer Seele aus einem nicht-metallischen Material und aus Stahl-Lagenfilamenten, welche die Seele ummanteln. Bekannt sind insbesondere Hybridkorde, deren Seele aus einem Polymer besteht. Die Verstärkungshybridkorde werden alternativ zu reinem Stahlkord eingesetzt, um bei Stahlkord ähnlichen Festigkeitsträgereigenschaften am Gewicht des Elastomerproduktes einzusparen und um in Anwendung im Reifen durch die Gewichtsersparnis den Rollwiderstand des Reifens zu verringern.

Der vorliegenden Erfindung liegt die Aufgabe zu Grunde, einen alternativen Verstärkungshybridkord für elastomere Erzeugnisse, insbesondere für eine Karkasslage oder eine Gürtellage eines Fahrzeugluftreifens bereitzustellen, der eine hohe Festigkeit und Biegesteifigkeit aufweist, aber dennoch vergleichsweise leicht an Gewicht ist.

Die Aufgabe wird gelöst, indem die Seele aus wenigstens einem Seelenfilamentgarn, - zwirn oder -kord aus dem Werkstoff Glasfaser besteht und dass die Stahl-Lagenfilamente um die Seele herum offen verseilt sind, so dass der Kord bis zur Seele mit Gummi durchdringbar ist.

Erfindungswesentlich ist, dass die Seele aus Glasfaser besteht und hoch-modulig ist, so dass nicht nur den Stahl-Lagenfilamenten, sondern auch der Seele eine tragende Funktion zukommt. Die Glasfaser - Seele weist einen Elastizitäts-Modul größer als 70 MPa auf. Der Kord ist ein offen konstruierter Kord. Das bedeutet, dass die Stahl-Lagenfilamente derart im Kord angeordnet sind, dass während der Herstellung einer Festigkeitsträgerlage beim Ummanteln der Festigkeitsträger mit Gummimaterial zur das Gummimaterial bis zur Seele vordringt und den Kord durchdringt. Durch den Einsatz von Glasfaser als Seelenmaterial ist die Haftung der Gummimatrix gegenüber bekannten Kordkonstruktionen verbessert, da die Haftung von Gummi und Glasfaser sehr gut ist und insbesondere besser als von Stahl ist. Durch die Durchdringung des Kordes mit Gummi ist die Haftung des Verstärkungskordes zur Gummimatrix zudem verbessert.

Auch bei einer nicht vollständigen Gummidurchdringung des Kordes, welche herstellungsbedingt vereinzelt auftreten kann, ist die Korrosionsbeständigkeit verbessert, denn Glasfaser neigt nicht zur Korrosion. Zudem übernimmt die Glasfaserseele eine tragende Funktion. Das Gewicht des Verstärkungskordes ist gering, da Glasfaser ein geringeres spezifisches Gewicht als Stahlkord aufweist. Der Hybridkord besitzt eine hohe Zugfestigkeit und einen hohen Modul bei einem im Vergleich zu reinem Stahlkord deutlich reduzierten Gewicht. Es ist ein Hybridkord geschaffen, dem annähernd die Eigenschaften eines reinen Stahlkordes zukommt, der jedoch wesentlich leichter vom Gewicht ist und eine bessere Gummihaftung aufweist. Hierdurch ist das Elastomerprodukt, in welchem der erfindungsgemäße Kord eingesetzt wird, leichter vom Gewicht, wodurch in Anwendung in einem Reifen dieser einen erwünscht verringerten Rollwiderstand aufweist. Im Vergleich zu anderen Hybridkorden, beispielsweise ein Kord aus einer Nylon (PA66) - Seele und Stahl-Lagenfilamenten kommt beim erfindungsgemäßen Kord der Seele eine tragende Funktion zu.

Als "Seele" wird der Kernstrang des Festigkeitsträgers bezeichnet, welcher ein Filament (Garn), Zwirn oder Kord sein kann. "Garne" meint fadenförmige textile Erzeugnisse aus einer Anzahl von Fasern/ Fäden. "Zwirne" meint verdrehte Garne, welche einstufig oder mehrstufig sein können. "Glasfaser" bezeichnet ein aus einer Vielzahl von Filamenten aufgebautes Garn. Die einzelnen Filamente bestehen dabei vorzugsweise aus U- oder K-Glas mit einem Filamentdurchmesser von kleiner 20µm. Als besonders geeignet haben sich Filamentdurchmesser kleiner 10 µm erwiesen.

Vorteilhaft ist es, wenn die Seele einen Titer von 250dtex bis 6000dtex, vorzugsweise 1100 - 3300 dtex aufweist. Der "Titer" gibt die Feinheit als längenbezogene Masse an. Der Titer der Seele ist jedoch bevorzugt derart gewählt, dass der durch die Stahl-Lagenfilamente gebildete Hohlraum optimal ausfüllbar ist. Hierdurch wird eine maximale Höchstzugkraft bei minimalem Korddurchmesser erreicht. Der Durchmesser der Seele hängt vom Durchmesser der Lagenfilamente ab. Daher sollte der bevorzugte Durchmesser der Seelenfilamente größer sein, als der Hohlraum, der sich bei einfacher Drehung der Lagenfilamente ergibt. Der Kord wird in eine offene Konstruktion gezwungen.

Der Twistlevel des Seelenfilamentgarnes oder des Seelenfilamentkordes beträgt vorzugsweise von 0t/m bis 500t/m, vorzugsweise 80 - 200 t/m. Es ist ein optimales Gleichgewicht zwischen Festigkeit, Modul und Ermüdungsbeständigkeit erreicht.

Vorteilhafterweise beträgt der Durchmesser (d₁) eines Stahl-Lagenfilamentes zwischen 0,1mm und 0,5mm. Es ist ein hoher Modul als Resultat des Ziehprozesses bei der Filamentproduktion erreicht.

Die Stahl-Lagenfilamente weisen vorteilhafterweise eine Schlaglänge zwischen 5mm bis 20mm auf, wodurch gute Ermüdungserscheinungseigenschaften des Kordes kombiniert mit geringen Produktionskosten und hohem Kordmodul erreicht werden.

In einer bevorzugten Ausführungsform weist der erfindungsgemäße Kord die Konstruktion Glasfaser 1100x3 + Stahl 0,35x6 aufweist. Der durch die Lagenfilamente gebildete Hohlraum ist optimal ausgefüllt.

Die Erfindung betrifft auch einen Fahrzeugluftreifen mit zumindest einer Verstärkungskorde aufweisenden Gürtel- und/oder Karkasslage, deren Verstärkungskorde zumindest gemäß einem der vorangehenden Ansprüche bzw. vorgenannten Ausführungen ausgeführt ist. Die Verstärkungshybridkorde können in Festigkeitsträgerlagen für PKW, als auch für LKW eingesetzt werden. Es sind verschiedenste Konstruktionen des erfindungsgemäßen Kordes möglich.

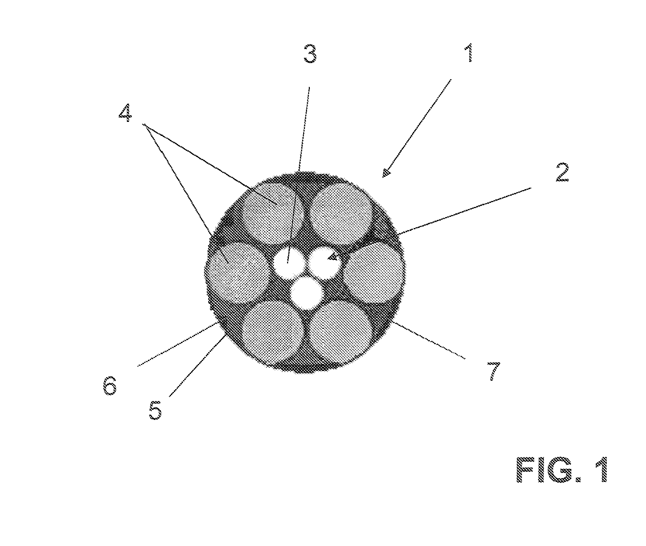

Die Erfindung wird nun anhand der Zeichnung, welche ein schematisches Ausführungsbeispiel darstellt, näher erläutert. Dabei zeigt die
- Fig.1: einen Querschnitt eines gummidurchdrungenen, erfindungsgemäß ausgeführten Hybridkord.

In der **Fig.1** ist ein Querschnitt eines erfindungsgemäß ausgeführten Hybridkordes 1 dargestellt. Der Verstärkungskord 1 ist ein Kord der Konstruktion 3+6 und besteht aus einer Seele 2 aus drei miteinander verdrehten Filamenten 3 aus Glasfaser. Die sechs Lagenfilamente 4 sind Stahlfilamente, die parallel zueinander liegend um die Seele 2 herum verseilt sind und einen Innenraum 6 umschreiben, in welcher die Seele 2 liegt. Die Stahl-Lagenfilamente 4 sind offen um die Seele 2 herum angeordnet, so dass sie eine gummidurchlässige Umhüllung um die Seele 2 bilden. Durch die Zwischenräume 7 der Stahl-Lagenfilamente 4 kann Gummi 5 während des Herstellungsprozesses der Gummiummantelung in den Innenraum 6 eindringen, so dass der Innenraum 6 ebenfalls gummidurchdrungen ist und eine zusätzliche Anbindung des Gummis 5 mit der Seele 2 erreicht ist. Jedes Seelenfilament 3 hat einen Titer von 1100dtex und somit hat die Seele 2 hat einen Titer von 1100dtex x 3, im Vergleich zu dem Durchmessern d₁ von 035mm der um die Seele herum angeordneten Lagenfilamente, so dass der durch die Stahl-Lagenfilamentumhüllung gebildete Innenraum 6 weitestgehend durch die Glasfaserseele 2 ausgefüllt ist.
Die Seele 2 ist ein aus drei Filamenten 3 verdrehtes Mehrfachgarn, dessen Twist 140 t/m beträgt. Die Schlaglänge der Stahllagenfilamente beträgt 18 mm.

Die Stahlfilamente können aus Stahl, insbesondere Kohlenstoffstahl beliebiger Festigkeitsklassen, insbesondere der Festigkeitsklassen NT (normal tensile), HT (high tensile), SHT (super high tensile) oder UHT (ultra high tensile) bestehen. Stahlfilamente der Festigkeitsklasse NT weisen eine Zugfestigkeit von 270 bis 3050 MPa, Stahlfilamente der Festigkeitsklasse HAT weisen eine Zugfestigkeit zwischen 3050 und 3330 MPa, Stahlfilamente der Festigkeitsklasse SHT eine Zugfestigkeit zwischen 3350 und 3650 MPa und Stahlfilamente der Festigkeitsklasse UHT weisen eine Zugfestigkeit über 3650 MPA auf.

### Bezugszeichenliste

- 1: Kord
- 2: Seele
- 3: Seelenfilament, -garn, -zwirn, -kord
- 4: Stahl-Lagenfilament
- 5: Gummi
- 6: Innenraum
- 7: Zwischenraum
- d1: Durchmesser Stahl-Lagenfilament

## Patentansprüche

1. Verstärkungskord (1) für elastomere Erzeugnisse, insbesondere für eine Karkasslage oder eine Gürtellage eines Fahrzeugluftreifens, bestehend aus einer Seele (2) aus einem nicht-metallischen Werkstoff und aus wenigstens vier Stahl-Lagenfilamenten (4), wobei die Stahl-Lagenfilamente (4) um die Seele (2) herum verseilt sind,
**dadurch gekennzeichnet, dass**
die Seele (2) aus wenigstens einem Seelenfilamentgarn, -zwirn oder -kord (3) aus dem Werkstoff Glasfaser besteht und
dass die Stahl-Lagenfilamente (4) um die Seele (2) herum offen verseilt sind, so dass der Kord (1) bis zur Seele (2) mit Gummi durchdringbar ist.

2. Verstärkungshybridcord nach Anspruch 1,
**dadurch gekennzeichnet, dass** die Seele (2) einen Titer von 250dtex bis 6000dtex, vorzugsweise 1100 - 3300 dtex aufweist.

3. Verstärkungshybridcord nach Anspruch 2,
**dadurch gekennzeichnet, dass** der Titer derart gewählt ist, dass der durch die Stahl-Lagenfilamente gebildete Hohlraum optimal ausfüllbar ist.

4. Verstärkungshybridcord nach wenigstens einem der vorangehenden Ansprüche,
**dadurch gekennzeichnet, dass** der Twistlevel des Seelenfilamentgarnes (3) oder des Seelenfilamentkordes (3) von 0t/m bis 500t/m, vorzugsweise 80 - 200 t/m beträgt.

5. Verstärkungshybridcord nach wenigstens einem der vorangehenden Ansprüche,
**dadurch gekennzeichnet, dass** der Durchmesser (d₁) eines Stahl-Lagenfilamentes (4) zwischen 0,1mm und 0,5mm beträgt.

6. Verstärkungshybridcord nach Anspruch 1 oder 5,
**dadurch gekennzeichnet, dass** die Stahl-Lagenfilamente (4) eine Schlaglänge aufweisen, die zwischen 5mm bis 20mm liegt.

7. Verstärkungshybridcord wenigstens einem der vorangehenden Ansprüche,
**dadurch gekennzeichnet, dass** der Kord (1) die Konstruktion Glasfaser 1100x3 + Stahl 0,35x6 aufweist.

8. Fahrzeugluftreifen mit zumindest einer Verstärkungshybridkorde aufweisenden Gürtel- und/oder Karkassenlage **dadurch gekennzeichnet, dass** die Verstärkungskorde (1) zumindest gemäß einem der vorangehenden Ansprüche ausgeführt ist.
